## Europäisches Patentamt
## European Patent Office
## Office européen des brevets

(11) Numéro de publication: **0 065 912**
**B1**

(12) **FASCICULE DE BREVET EUROPEEN**

(45) Date de publication du fascicule du brevet:
**27.03.85**

(51) Int. Cl.⁴: **G 21 C 1/02**

(21) Numéro de dépôt: **82400881.7**

(22) Date de dépôt: **12.05.82**

(54) Cuve interne pour un réacteur nucléaire à neutrons rapides.

(30) Priorité: **13.05.81 FR 8109521**

(43) Date de publication de la demande:
**01.12.82 Bulletin 82/48**

(45) Mention de la délivrance du brevet:
**27.03.85 Bulletin 85/13**

(84) Etats contractants désignés:
**BE DE GB IT NL**

(56) Documents cités:
**FR - A - 2 220 847**
**FR - A - 2 461 336**
**US - A - 4 167 445**

**JOURNAL OF THE BRITISH NUCLEAR ENERGY
SOCIETY, vol. 14, no. 3, juillet 1975, pages 183-190,
London (GB);**

(73) Titulaire: **NOVATOME, 20 Avenue Edouard Herriot,
F-92350 Le Plessis Robinson (FR)**

(72) Inventeur: **Presciuttini, Léonardo, 89 rue Houdon,
F-92330 Sceaux (FR)**

(74) Mandataire: **Bouget, Lucien et al,
CREUSOT-LOIRE 15 rue Pasquier, F-75383 Paris
Cedex 08 (FR)**

BUNDESDRUCKEREI BERLIN

## Description

L'invention concerne un réacteur nucléaire à neutrons rapides comportant une cuve principale, ou cuve externe, symétrique de révolution autour d'un axe vertical renfermant du sodium liquide dans lequel est plongé le cœur de réacteur. Le cœur du réacteur est lui-même disposé à l'intérieur de la cuve interne qui sépare le volume intérieur de la cuve principale en deux zones distinctes.

La zone disposée à l'intérieur de la cuve interne dans laquelle se trouve le cœur du réacteur renferme du sodium à haute température réchauffé au contact du cœur. Ce sodium est appelé »sodium chaud«.

La zone située à l'extérieur de la cuve interne renferme du sodium à température plus basse qui a été refroidi au contact du sodium secondaire à l'intérieur des échangeurs de chaleur intermédiaires.

Une partie de ce sodium prélevée à la base du cœur sert au refroidissement de la cuve principale, un dispositif permettant la circulation de ce sodium refroidi étant prévu à la périphérie de la cuve principale.

Dans le cas des réacteurs intégrés, les pompes de mise en circulation du sodium primaire contenu dans la cuve principale traversent la paroi de la cuve interne. Les échangeurs intermédiaires traversent également cette paroi.

Dans le cas des réacteurs nucléaires expérimentaux de faible puissance, la cuve interne peut être constituée par une virole cylindrique à sa partie supérieure et par une virole tronconique à sa partie inférieure joignant la virole cylindrique à la base du cœur. Ces deux viroles ont pour axe l'axe de la cuve principale et le raccord entre la virole tronconique et la virole cylindrique se fait par l'intermédiaire d'un raccordement courbe ayant un rayon relativement important.

Dans le cas des réacteurs nucléaires de production d'énergie de grande puissance, il n'est plus possible de prévoir une structure à simple paroi de la cuve interne et celle-ci est constituée par une première virole reliée à sa partie inférieure à une paroi de raccordement à la base du cœur appelée redan conique et par une seconde virole disposée à l'extérieur de la première virole reliée à la base du cœur par l'intermédiaire d'une paroi en forme de portions de tore appelée redan torique.

La paroi interne de la cuve qui n'est soumise à aucune pression sert uniquement à l'isolation thermique de la paroi externe qui supporte la pression du sodium contenu dans la cuve interne.

Cette structure complexe est très coûteuse car le poids d'acier inoxydable de qualité nucléaire nécessaire pour sa construction est très important. D'autre part, la forme spéciale de cette double paroi nécessite des opérations complexes et coûteuses pour sa fabrication.

Le but de l'invention est donc de proposer un réacteur nucléaire à neutrons rapides comportant une cuve principale, ou cuve externe, symétrique de révolution autour d'une axe vertical, renfermant du sodium liquide dans laquel est plongé le cœur du réacteur, lui-même disposé à l'intérieur d'une cuve interne qui sépare le volume intérieur de la cuve principale en deux zones distinctes dont l'une, à l'intérieur de la cuve interne, renferme le sodium échauffé au contact du cœur et dont l'autre, à l'extérieur de la cuve interne, renferme du sodium refroidi dont une partie circule en contact avec la cuve principale, la cuve interne symétrique de révolution autour de l'axe de la cuve principale étant constituée par une virole cylindrique et une paroi joignant la partie inférieure de la virole à la partie périphérique du support sur lequel repose le cœur du réacteur, cette cuve interne devant permettre une économie importante dans les quantités d'acier de qualité nucléaire utilisées et dans le coût des opérations de mise en forme de la paroi de la cuve.

Dans ce but, la paroi joignant la virole au support de cœur a comme méridienne une courbe, c'est-à-dire une ligne ne comportant pas de parties droites, dont la concavité est dirigée vers le bas, qui ne comporte aucun point où la tangente à la courbe est horizontale et qui se raccorde à la virole, à sa partie supérieure, et au support de cœur à sa partie inférieure, en constituant des points anguleux de façon que les contraintes dans la paroi en service soient limitées à un niveau acceptable par leur répartition dans cette paroi et leur transmission au support de cœur. Afin de bien faire comprendre l'invention on va maintenant décrire, à titre d'exemples non limitatifs, deux modes de réalisation d'une cuve interne suivant l'invention, par comparaison avec une cuve interne suivant l'art antérieur.

La figure 1 représente une demi-vue en coupe par un plan vertical de symétrie de la cuve d'un réacteur nucléaire à neutrons rapides de type intégré, suivant l'art antérieur.

La figure 2 représente une demi-vue en coupe par un plan vertical de symétrie de la cuve d'un réacteur nucléaire à neutrons rapides de type intégré, comportant une cuve interne suivant l'invention et suivant un premier mode de réalisation.

La figure 3 représente une demi-vue en coupe d'une cuve d'un réacteur nucléaire à neutrons rapides de type intégré, comportant une cuve interne suivant l'invention et suivant un second mode de réalisation.

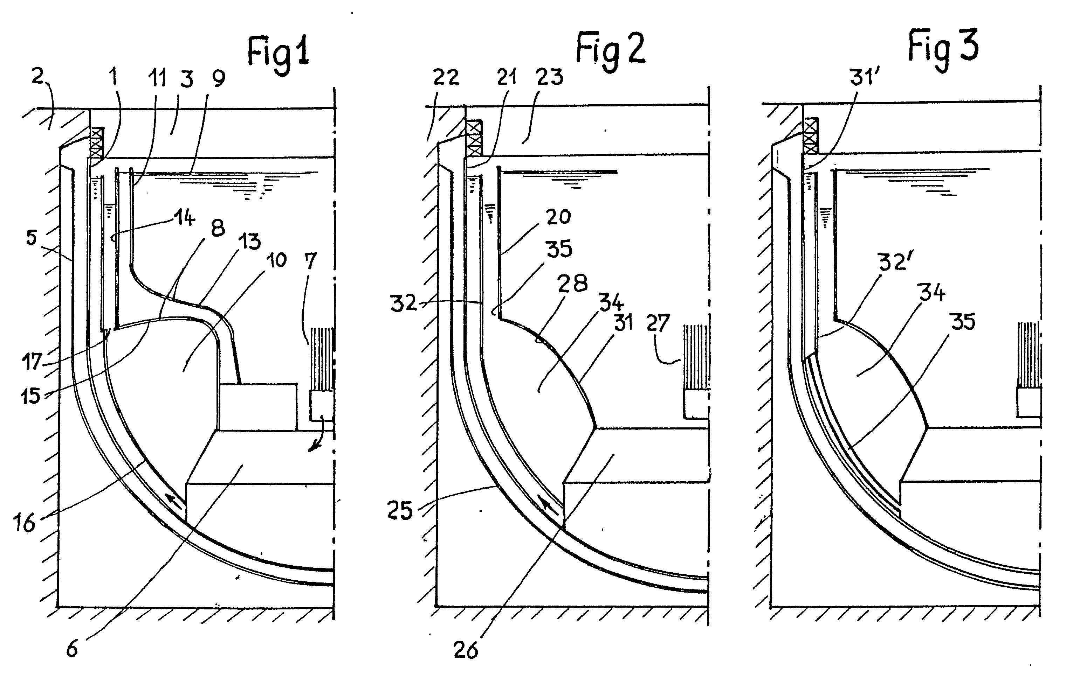

Sur la figure 1, on voit la cuve principale 1 d'un réacteur nucléaire à neutrons rapides de type intégré, cette cuve étant fixée à sa partie supérieure sur la structure en béton 2 du réacteur comportant la dalle de fermeture 3 de forte épaisseur de la cuve.

La cuve principale 1 est doublée à l'extérieur par une cuve de sécurité 5 fixée sur la structure 2.

A l'intérieur de la cuve 1 est disposé un platelage de support 6 du cœur 7 du réacteur.

Ce support repose sur la partie inférieure de la cuve principale 1.

Le volume intérieur de la cuve 1 est séparé en deux parties par la cuve interne 8 qui repose à sa partie inférieure sur le support de cœur 6.

La zone de la cuve principale disposée à l'intérieur de la cuve interne 8 dans laquelle est disposé le cœur renferme le sodium chaud jusqu'au niveau 9.

La zone de la cuve principale disposée à l'extérieur de la cuve interne 8 constitue en particulier le collecteur froid 10 recevant le sodium refroidi dans les échangeurs intermédiaires dont la partie supérieure est dans le sodium chaud et la partie inférieure dans le sodium froid, ces échangeurs intermédiaires traversant la cuve interne.

La cuve interne est constituée par une double paroi. La paroi intérieure de la cuve interne est constituée par une virole cylindrique 11 ayant le même axe que la cuve 1 et par un redan conique 13 relié à la partie inférieure de la virole 11 par l'intermédiaire d'un raccord courbe et d'autre part au support de cœur 6 à sa partie inférieure. Cette paroi intérieure de la cuve interne ne subit pas la pression du sodium qui est au même niveau des deux côtés de la paroi intérieure. Cette paroi intérieure sert uniquement à l'isolation thermique de la seconde paroi de la cuve interne. Cette seconde paroi ou paroi externe est constituée par une virole 14 cylindrique et co-axiale à la cuve et à la virole 11 reliée à un redan torique 15 permettant le raccord entre la virole 14 et le support de cœur 6. Cette paroi externe subit la pression du sodium qui est à des niveaux différents de part et d'autre de la paroi mais est isolée du sodium le plus chaud par la paroi intérieure de la cuve interne 8. L'espace entre les viroles 11 et 14 ainsi que l'espace inter-redan renferment en effet du sodium à une température plus faible que le sodium ayant traversé le cœur 7 et contenu à l'intérieur de la cuve interne.

A l'intérieur de la zone de la cuve principale disposée à l'extérieur de la cuve interne est d'autre part prévu un baffle 16 permettant de ménager un espace annulaire entre la cuve et le baffle pour la circulation de sodium froid de refroidissement de la cuve principale 1 et constituant ensemble avec le platelage 6 le support du redan torique 15.

Cet espace annulaire est en communication avec la partie inférieure du support de cœur par où arrive le sodium froid dont une partie est dirigée dans l'espace annulaire pour le refroidissement de la cuve.

Le sodium froid se déverse à la partie supérieure du baffle 16 dans l'espace annulaire compris entre ce baffle 16 et la virole 14 pour retourner dans le collecteur froid 10 par des ouvertures 17 ménagées à l'extrémité du redan torique 15.

Cette structure selon l'art antérieur présente une bonne tenue thermique et mécanique mais utilise une masse très importante d'acier inoxydable de qualité nucléaire pour constituer la structure de la cuve interne.

Sur la figure 2, on voit la cuve principale 21 d'un réacteur nucléaire à neutrons rapides de type intégré comportant une structure en béton 22 sur laquelle est fixée la cuve 21 et la dalle 23 de fermeture de cette cuve. La cuve principale est doublée par une cuve de sécurité 25 également fixée sur la structure 22.

Un platelage 26 de support du cœur 27 du réacteur repose sur la partie inférieure de la cuve 21 à l'intérieur de celle-ci.

La paroi 28 de la cuve interne est constituée par une seule virole cylindrique 20 et un seul redan 31, cette paroi 28 ayant une forme lui permettant de supporter la pression du sodium bien qu'elle ne prenne appui que sur le platelage 26. Entre la cuve interne et la cuve principale est d'autre part disposé un baffle 32 permettant de réaliser une circulation de sodium froid entre la base du cœur et le collecteur froid 34 pour le refroidissement de la cuve principale 21 supportant l'ensemble de la charge constituée par le sodium, le cœur du réacteur et les diverses structures internes de la cuve.

Le redan 31 est constitué par une paroi à symétrie de révolution autour de l'axe de la cuve principale dont la méridienne est une courbe dont la concavité est dirigée constamment vers le bas, qui ne comporte aucun point où la tangente à la courbe est horizontale et se raccorde d'une part à la virole 20 et d'autre part au platelage en des points constituant des points anguleux, c'est-à-dire sans raccord courbe de rayon important.

Cette simple paroi 28 de la cuve interne a été constituée par des tôles de même épaisseur et dans la même nuance d'acier que les tôles utilisées précédemment pour constituer la paroi à résistance mécanique de la cuve interne, dans les réacteurs de l'art antérieur.

La forme particulière du redan permet une répartition des contraintes, avec report des forces sur le platelage qui permet de résister à ces pressions, les contraintes primaires ayant un niveau suffisamment faible; ainsi une réserve de résistance est obtenue pour la tenue aux contraintes thermiques bien que la paroi unique de la cuve interne soit au contact avec le sodium chaud.

Le redan représenté à la figure 2 est constitué par deux portions de tore dont les cercles méridiens ont des rayons différents.

Dans un exemple de réalisation, la partie supérieure du redan est constituée par une portion de tore dont le rayon du cercle méridien est voisin de sept mètres, alors que la portion inférieure du redan est constituée par une portion de tore dont le rayon du cercle méridien est voisin de quatre mètres, ceci dans le cas d'une cuve principale ayant un diamètre de l'ordre de vingt mètres.

Une particularité essentielle du redan est que la courbe méridienne, par exemple constituée par des portions d'arcs de cercle, permettant de l'engendrer par rotation autour de l'axe de la cuve, ne possède aucun point où la tangente est horizontale. Ainsi, le report des forces venant de la pression du sodium sur la paroi de la cuve interne sur le platelage se fait sans création de contraintes excessives dans le redan.

D'autre part, la construction de la paroi de la cuve interne est particulièrement simple puisqu'elle ne comporte qu'une virole cylindrique reliée par soudage au redan courbe, au niveau d'une arête 35 constituant un point anguleux sur la méridienne de la paroi 28 de la cuve interne.

En adoptant cette forme de redan, il est toujours possible, étant données la pression du sodium, de calculer une forme de courbe permettant une résistance suffisante aux contraintes, avec un très bon facteur de sécurité.

Sur la figure 3, les éléments correspondant aux éléments qui ont déjà été décrits en se référant à la figure 2 comportent les mêmes repères.

Par rapport au mode de réalisation qui a été décrit en se référant à la figure 2, la baffle 32' permettant de limiter un espace annulaire de circulation du sodium froid au contact de la cuve principale 31' ne s'étend pas jusqu'à la partie inférieure de la cuve principale mais est au contraire interrompu au niveau de la partie supérieure du collecteur froid 34, la circulation du sodium froid vers le haut, vers l'espace annulaire étant assurée grâce à des tubes 35 reliant la base du cœur par où arrive le sodium froid à la partie inférieure de l'espace annulaire ménagé par le baffle 32'.

De cette façon, on diminue la masse d'acier inoxydable de qualité nucléaire nécessaire pour la constitution des structures internes de la cuve.

En effet, si l'on compare les dispositifs représentés aux figures 1 et 2, on s'aperçoit que le baffle 32' n'a plus un rôle de soutien du redan comme le baffle 16 selon l'art antérieur qui soutenait le redan torique 15.

On peut donc supprimer la partie inférieure du baffle qui ne sert plus qu'à canaliser le sodium froid dans la zone annulaire en contact avec la cuve principale.

La nouvelle forme du redan permet de supporter les forces dues à la pression du sodium sur la paroi de la cuve interne avec une seule paroi en contact avec le sodium chaud, grâce au report des forces sur les appuis du redan produit grâce à la forme particulière de celui-ci.

On voit que les principaux avantages du dispositif suivant l'invention sont de permettre de réduire la masse d'aciers spéciaux de qualité nucléaire nécessaire pour la construction des parties internes de la cuve d'un réacteur nucléaire à neutrons rapides et de faciliter la contruction de la cuve interne qui peut être obtenue par soudage d'une virole et d'une paroi courbe suivant une arête annulaire.

La masse d'aciers inoxydables de qualité nucléaire peut encore être réduite si l'on supprime la partie interieure du baffle limitant la circulation de sodium froid pour la remplacer par un ensemble de tubes d'alimentation du déversoir de sodium de refroidissement.

L'invention ne se limite pas aux modes de réalisation qui ont été décrits; c'est ainsi que la méridienne de la surface courbe constituant le redan peut être réalisée sous la forme d'une succession d'arcs de cercles en un nombre quelconque ou sous la forme d'une courbe continue unique, ou encore sous la forme d'une succession de courbes différentes d'arcs de cercles.

L'invention s'applique non seulement dans le cas des réacteurs nucléaires à neutrons rapides de type intégré mais également dans le cas des réacteurs nucléaires à boucles.

**Revendications**

1. Réacteur nucléaire à neutrons rapides comportant une cuve principale (21), ou cuve externe, symétrique de révolution autour d'un axe vertical, renfermant du sodium liquide dans lequel est plongé le cœur (27) du réacteur, lui-même disposé à l'intérieur d'une cuve interne (28) qui sépare le volume intérieur de la cuve principale (21), en deux zones distinctes dont l'une, à l'intérieur de la cuve interne, renferme le sodium échauffé au contact du cœur (27), et dont l'autre (34), à l'extérieur de la cuve interne (28), renferme du sodium refroidi dont une partie circule en contact avec la cuve principale (21), la cuve interne (28), symétrique de révolution autour de l'axe de la cuve principale (21), étant constituée par une virole cylindrique (20) et une paroi (31), joignant la partie inférieure de la virole (20) à la partie périphérique du support (26) sur lequel repose le cœur (27) du réacteur, caractérisé par le fait que la paroi (31) joignant la virole (20) au support du cœur (26) a comme méridienne une courbe, c'est-à-dire une ligne ne comportant pas de partie droite, dont la concavité est dirigée vers le bas, qui ne comporte aucun point où la tangente à la courbe est horizontale et qui se raccorde à la virole (20), à sa partie supérieure, et au support (26) du cœur (27) à sa partie inférieure, en constituant des points anguleux de façon les contraintes dans la paroi (31) en service soient limitées à un niveau acceptable par leur répartition dans cette paroi (31) et leur transmission au support (26) du cœur (27).

2. Réacteur nucléaire suivant la revendication 1, caractérisée par le fait que la méridienne de la paroi (31) à symétrie de révolution joignant la virole cylindrique (20), à la partie périphérique du support (26), du cœur (27), est constituée par une succession d'arcs de cercles de rayons différents.

3. Réacteur nucléaire suivant l'une quelconque des revendications 1 et 2, dans le cas où la cuve interne (28) est associée à une virole (32), disposée entre la cuve principale (31') et la cuve interne (28) disposée sur une partie seulement de la hauteur de la cuve principale (31') et constituant avec celle-ci un espace annulaire fermé pour la circulation du sodium froid en contact avec la cuve principale (31'), caractérisé par le fait que l'espace annulaire est mis en communication avec la partie inférieure du cœur par où arrive le sodium froid, par l'intermédiaire de tubes (35) d'alimentation en sodium froid.

## Patentansprüche

1. Schnellneutronenkernreaktor bestehend aus einem um eine Senkrechtachse drehsymmetrischen Hauptbehälter (21) oder Außenbehälter mit darin enthaltendem Flüssignatrium, in das der Reaktorkern (27) eingetaucht ist, der seinerseits innen in einem den Innenraum des Hauptbehälters (21) in zwei einzelne Zonen unterteilenden Innenbehälter (28) angeordnet ist, wobei die eine innen in dem Innenbehälter befindliche Zone das bei Kontakt mit dem Kern (27) erhitzte Natrium, und die andere außerhalb des Innenbehälters (28) liegende Zone (34) das gekühlte Natrium aufnimmt — ein Teil davon ist durch Umlauf in Berührung mit dem Hauptbehälter (21) — und wobei der um die Achse des Hauptbehälters (21) drehsymmetrische Innenbehälter (28) aus einem Zylindermantel (20) und einer Wand (31) besteht, die das Unterteil des Mantels (20) mit dem Peripherieteil der den Reaktorkern (27) abstützenden Auflage (26) verbindet, dadurch gekennzeichnet, daß die den Mantel (20) mit der Kernauflage (26) verbindende Wand (31) als Mittagslinie eine Kurve aufweist, d. h. eine Linie ohne geraden Abschnitt, mit einer nach unten ausgerichteten Konkavität, wobei diese keinen Punkt besitzt bei dem die Tangente horizontal zur Linie verläuft und sich diese an den Mantel (20) an dessen Oberteil und an die Auflage (26) des Kerns (27) an deren Unterteil anschließt, wodurch scharfkantige Punkte gebildet werden, um die Spannungen in der Wand (31) durch deren Verteilung in dieser Wand (31) und deren Übertragung auf die Auflage (26) des Kerns (27) auf eine zulässige Höhe im Betrieb zu beschränken.

2. Kernreaktor nach Anspruch 1, dadurch gekennzeichnet, daß die Mittagslinie der drehsymmetrischen den Zylindermantel (20) mit dem peripheren Teil der Auflage (26) des Kerns (27) verbindende Wand (31) aus aufeinanderfolgende Kreisbogen mit unterschiedlichen Radien besteht.

3. Kernreaktor nach einem der Ansprüche 1 und 2, bei welchem der Innenbehälter (28) mit einem über nur einen Teil der Höhe des Hauptbehälters (31') zwischen dem Hauptbehälter (31') und dem Innenbehälter (28) angeordneten Mantel (32') verbunden ist, der mit diesem einen geschlossenen kreisförmigen Raum zum Umlauf des mit dem Hauptbehälter (31') in Berührung befindlichen kalten Natriums bildet, dadurch gekennzeichnet, daß der kreisförmige Raum über Versorgungsleitungen (35) für kaltes Natrium mit dem das kalte Natrium aufnehmenden unteren Teil des Kerns in Verbindung gebracht wird.

## Claims

1. Fast-neutron nuclear reactor incorporating a main vessel (21), or outer vessel, with symmetry of revolution around a vertical axis, enclosing liquid sodium in which is immersed the reactor core (27), itself arranged inside an inner vessel (28) which divides the inner volume of the main vessel (21) into two distinct zones one of which, inside the inner vessel, encloses the heated sodium in contact with the core (27), and the other of which (34), outside the inner vessel (28), encloses the cooled sodium a part of which circulates in contact with the main vessel (21), the inner vessel (28), with symmetry of revolution around the axis of the main vessel (21), consisting of a cylindrical shell (20) and a wall (31) joining the lower part of the shell (20) to the peripheral part of the base (26) on which the reactor core (27) rests, characterised in that the wall (31) joining the shell (20) to the core base (26) has, as a meridian, a curve, that is to say a line which does not include a straight part, the concavity of which is directed downwards, which does not include any point where the tangent to the curve is horizontal and which is joined to the shell (20) at its upper part and to the core (27) base (26) at its lower part, forming angular points so that the stresses in the wall (31) are restricted to an acceptable level during operation by their distribution in this wall (31) and their transmission to the core (27) base (26).

2. Nuclear reactor according to Claim 1, characterised in that the meridian of the wall (31) with a symmetry of revolution joining the cylindrical shell (20) to the peripheral part of the core (27) base (26) is formed by a series of arcs of circles of different radii.

3. Nuclear reactor according to either of Claims 1 and 2, in the case where the inner vessel (28) is associated with a shell (32) arranged between the main vessel (31') and the inner vessel (28), arranged over only a part of the height of the main vessel (31') and forming with the latter a closed annular space for the circulation of cold sodium in contact with the main vessel (31'), characterised in that the annular space communicates with the lower part of the core through which the cold sodium arrives, through the intermediacy of pipework (35) for supplying cold sodium.

Fig 1

Fig 2

Fig 3

0 065 912